# FASCICULE DE BREVET EUROPEEN

(11) **EP 3 901 507 B1**
(45) Date de publication et mention de la délivrance du brevet: **02.11.2022**
(21) Numéro de dépôt: 21164412.5
(22) Date de dépôt: 23.03.2021
(51) Int. Cl.: F16L 23/08

(54) **SYSTEME DE SERRAGE POUR LE RACCORDEMENT DE TUBES, COMPRENANT UN COLLIER ET UNE RONDELLE PORTANT DES PATTES DE SUPPORT**
SPANNSYSTEM FÜR DIE VERBINDUNG VON ROHREN, DAS EINE SCHELLE UND EINE UNTERLEGSCHEIBE MIT HALTEBÜGELN UMFASST
TIGHTENING SYSTEM FOR CONNECTING PIPES, COMPRISING A COLLAR AND A WASHER HAVING SUPPORTING TABS

(30) Priorité: 03.04.2020 FR 2003382; 19.05.2020 FR 2005095
(43) Date de publication de la demande: 27.10.2021
(73) Titulaire: Caillau, 92130 Issy-les-Moulineaux (FR)
(72) Inventeur: MESNARD, Eric, 41250 TOURS EN SOLOGNE (FR)
(74) Mandataire: Cabinet Beau de Loménie

(56) Documents cités:
- EP-A1- 3 306 164
- WO-A1-2019/115390
- FR-A1- 3 057 918

## Description

### Domaine Technique

L'exposé se rapporte à un système de serrage pour le raccordement d'un premier et d'un deuxième tube dont les extrémités en regard présentent des surfaces d'appui faisant saillie par rapport à la surface extérieure cylindrique desdits tubes, le système comprenant un collier et une rondelle, le collier pouvant être serré autour des surfaces d'appui des tubes.

### Technique antérieure

On connait par les brevets EP 1 451 498, EP 2 598 785 et EP 3 232 107, des systèmes de serrage comprenant un collier qui présente une ceinture apte à être serrée par réduction de son diamètre et une rondelle pré-montée dans le collier. Plus précisément, ce système comprend une rondelle qui comprend une partie annulaire fermée formant un joint d'étanchéité et des pattes reliant ce joint d'étanchéité au collier. La rondelle est initialement maintenue par rapport à la ceinture du collier de sorte qu'un espace annulaire soit ménagé entre la partie annulaire de la rondelle et la périphérie interne de la ceinture, de manière à permettre l'engagement de l'extrémité d'un tube entre la partie annulaire de la rondelle et la ceinture. Ensuite, le tube interne est lui-même engagé de manière à venir au contact la partie annulaire de la rondelle. Ce dispositif est particulièrement adapté au serrage de deux tubes emmanchés ensemble et présentant des surfaces en saillie radiale servant d'appui pour un collier de serrage qui comprend un renfoncement pouvant loger ces surfaces en saillie radiale, la partie annulaire de la rondelle ayant elle-même une forme adaptée à ces surfaces en saillie.

En particulier, la rondelle peut être réalisée dans un métal de type acier inoxydable, ainsi que la ceinture du collier.

Dans brevets précités, en particulier EP 1 451 498 et EP 2 598 785, la rondelle est maintenue en position par rapport au collier à l'état non serré grâce à des pattes de différents types. Certaines pattes sont des pattes internes, qui sont entièrement contenues à l'intérieur de la ceinture et ont la forme de languettes relevées radialement pour prendre appui sur la périphérie interne de l'un des flancs de la ceinture et retenir la rondelle vis-à-vis d'un déplacement axial par rapport au collier dans un premier sens allant vers l'extérieur de ce flanc. D'autres pattes, plus longues que les pattes internes, sont conformées en crochets dont les têtes dépassent à l'extérieur au-delà du bord de ce flanc de la ceinture afin de s'accrocher sur ce dernier de manière à retenir la rondelle vis-à-vis d'un déplacement axial en sens inverse. Ainsi, les pattes de ces deux types maintiennent le positionnement axial de la rondelle par rapport au collier avant le serrage de ce dernier et assurent la présence de l'espace annulaire précité. D'autres pattes encore servent au centrage de la rondelle par rapport au collier.

Ces systèmes donnent satisfaction mais imposent des géométries relativement complexes et des étapes de fabrications distinctes pour doter la rondelle des pattes de ces différents types.

Le brevet EP 3 306 164 A1 divulgue un système de serrage comprenant un collier qui présente une ceinture apte à être serrée par réduction de son diamètre et une rondelle comprenant une partie annulaire disposée à l'intérieur de la ceinture et portant des pattes de support qui présentent un crochet configuré pour s'accrocher sur un bord de la ceinture et un tronçon de liaison qui s'étend entre la partie annulaire et le crochet.

### Exposé de l'invention

L'exposé vise à remédier au moins substantiellement aux inconvénients précités. Ainsi, l'exposé concerne un système de serrage pour le raccordement d'un premier et d'un deuxième tube dont les extrémités en regard présentent des surfaces d'appui faisant saillie par rapport à la surface extérieure cylindrique desdits tubes, le système comprenant un collier pouvant être serré et une rondelle, le collier comprenant une ceinture apte à coopérer avec lesdites surfaces d'appui par sa périphérie intérieure délimitant un renfoncement dans lequel les surfaces d'appui peuvent être insérées, la rondelle comprenant une partie annulaire disposée à l'intérieur de la ceinture et portant des pattes de support qui présentent un crochet configuré pour s'accrocher sur un bord de la ceinture et un tronçon de liaison qui s'étend entre la partie annulaire et le crochet, le tronçon de liaison portant au moins une aile de retenue qui est repliée radialement vers l'extérieur et qui présente un bord de retenue espacé du crochet, l'aile de retenue présentant une largeur, mesurée axialement, qui diminue vers son extrémité libre, le bord de la ceinture étant logé dans l'espace ménagé entre le bord de retenue et le crochet.

Ainsi, une même patte de support permet à la fois, par son crochet et par l'aile de retenue repliée, de retenir la rondelle par rapport au collier dans les deux sens axiaux opposés et de maintenir l'espace annulaire nécessaire à l'engagement de l'extrémité d'un tube entre la rondelle et le flanc adjacent de la ceinture, pour prémonter le système de serrage sur ce tube. Elle assure donc les fonctions de double retenue axiale de la rondelle et d'entretoisement. Selon l'exposé, la largeur axiale de l'aile de retenue diminue vers son extrémité libre. Lors du serrage du collier, la patte de support, en particulier l'aile de retenue, se déforme pour permettre le serrage effectif de la ceinture sur les surfaces d'appui. Il importe en effet que, à l'état serré du collier sur les tubes, l'encombrement radial de la patte de support et, en particulier de l'aile de retenue, soit minimisé. Cette déformation de l'aile de retenue diminue sa hauteur radiale, par exemple en la rabattant radialement vers l'intérieur, comme si elle se dépliait par rapport au tronçon de liaison qui la porte. Une partie de l'effort mis en œuvre pour le serrage du collier est consommée pour provoquer la déformation de l'aile de retenue et n'est par conséquent pas directement utile à l'effort de serrage de la ceinture sur les surfaces d'appui. La Demanderesse s'est rendue compte que le fait de doter l'aile de retenue d'une faible largeur à son extrémité libre, la rend plus sensible aux efforts radiaux de déformation. En d'autres termes, grâce à sa forme particulière, l'aile de retenue commence à se déformer à partir d'un effort modéré et, une fois cette déformation amorcée, elle se poursuit à mesure que le serrage du collier continue, sans consommer une part importante de l'effort de serrage. Ainsi, et bien que l'aile de retenue ait à sa base une largeur suffisante pour lui permettre de résister aux déformations axiales et assurer sa fonction de double retenue axiale de la rondelle et d'entretoisement, elle se déforme lors du serrage du collier sans consommer une part significative de l'effort mis en œuvre pour le serrage. La largeur de l'aile de retenue peut ne pas diminuer continûment depuis sa base, mais au moins dans la région de son extrémité libre radiale externe, l'aile de retenue présente une largeur qui diminue en allant radialement vers l'extérieur, jusqu'à cette extrémité libre. Ceci étant, il est avantageux de la largeur de l'aile de retenue diminue depuis sa base jusqu'à son extrémité libre.

Optionnellement, l'aile de retenue présente une forme triangulaire.

Optionnellement, la largeur de l'aile de retenue à l'extrémité libre de cette dernière est inférieure ou égale à 1/4 de la largeur de l'aile de retenue à sa base, optionnellement inférieure ou égale à 1/10 de la largeur de l'aile de retenue à sa base Optionnellement, la largeur de l'aile de retenue à l'extrémité libre de cette dernière est inférieure ou égale à 1/5 de la longueur du tronçon de liaison, optionnellement inférieure ou égale à 1/15 de la longueur du tronçon de liaison.

Optionnellement, la largeur de l'aile de retenue à la base de cette dernière est inférieure ou égale à 1/3 de la longueur du tronçon de liaison.

Optionnellement, l'extrémité libre de l'aile de retenue forme une pointe.

Optionnellement considéré en vue radiale, le bord de retenue de l'aile de retenue présente une forme concave.

Optionnellement, considéré en vue radiale, le bord de l'aile de de retenue opposé au bord de retenue présente une forme convexe.

Optionnellement, le tronçon de liaison présente une aile de retenue sur chacun de ses deux bords.

Optionnellement, les pattes de support présentent une saillie interne, configurée pour s'agripper sur la surface d'appui d'un tube insérée dans le collier.

Optionnellement, la saillie interne comprend une languette portée par le tronçon de liaison et repliée radialement vers l'intérieur par rapport audit tronçon.

Optionnellement, la languette est découpée dans le tronçon de liaison.

Optionnellement, la languette est dirigée dans le sens allant en s'éloignant du crochet.

Optionnellement, le tronçon de liaison s'étend sensiblement axialement.

Optionnellement, la patte de support est formée en une seule pièce avec la partie annulaire.

### Brève description des dessins

[Fig. 1] La figure 1 est une vue en perspective d'un système de serrage selon le présent exposé prise d'un premier côté.
[Fig. 2] La figure 2 est une vue en perspective du système représenté sur la figure 1, prise de l'autre côté.
[Fig. 3] La figure 3 est une vue en perspective éclatée montrant différents éléments constitutifs du système de serrage représentés séparément, ainsi que les extrémités de deux tubes devant être assemblés à l'aide de ce système.
[Fig. 4] La figure 4 est une vue en coupe axiale dans le plan IV de la figure 1 montrant, d'une part, le système de serrage selon l'exposé et, d'autre part, les extrémités de deux tubes devant être assemblés à l'aide de ce système de serrage.
[Fig. 5] La figure 5 est une vue agrandie du détail V de la figure 1.
[Fig. 6] La figure 6 est une vue agrandie du détail VI de la figure 2.
[Fig. 7] La figure 7 est une vue du détail VII de la figure 4.
[Fig. 8] La figure 8 est une vue en coupe axiale partielle prise comme celle de la figure 4, pour une variante de réalisation.
[Fig. 9] La figure 9 est une vue partielle en perspective montrant une variante pour le joint d'étanchéité.
[Fig. 10] La figure 10 montre une variante de réalisation d'une patte de support.

### Description des modes de réalisation

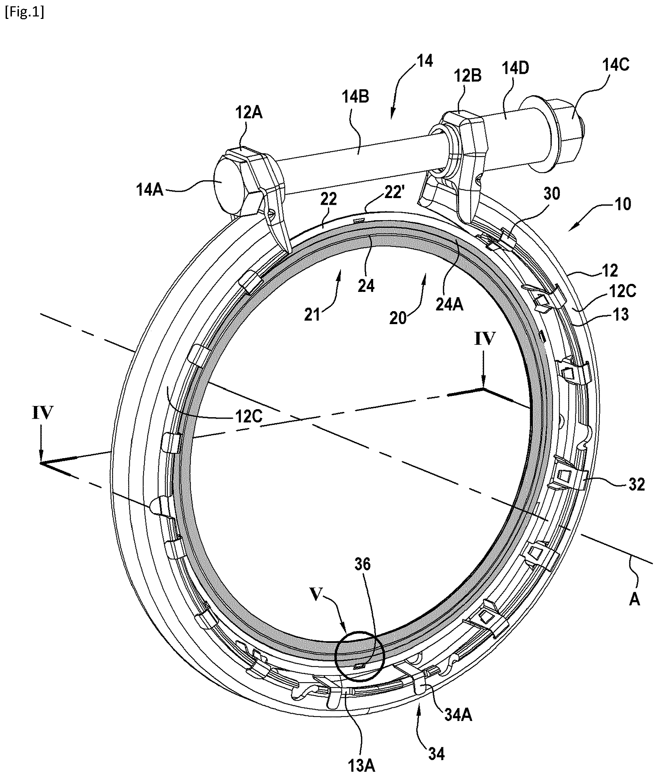

La figure 1 montre un collier de serrage 10 comprenant une ceinture 12 dont les extrémités sont relevées radialement de manière à former des pattes de serrage respectivement 12A et 12B. Pour serrer le collier, le diamètre de la ceinture est réduit par coopération d'une vis de serrage 14 avec les pattes de serrage 12A et 12B. Le fût 14B de la vis traverse des perçages des pattes de serrage, sa tête 14A coopérant avec la patte 12A et l'extrémité opposée étant pourvue d'un écrou 14C coopérant avec la patte 12B en l'espèce via une entretoise 14D.

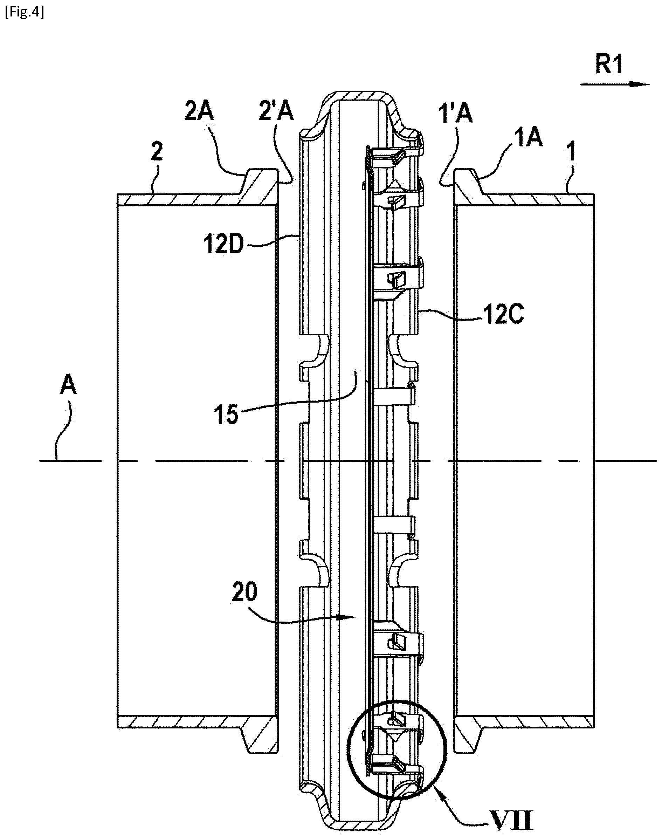

La ceinture 12 présente un renfoncement interne 15 (mieux visible sur la figure 4) ménagé entre deux flancs, respectivement 12C et 12D, de cette ceinture. Une rondelle20 qui forme en l'espèce un joint d'étanchéité, est disposée à l'intérieur de la ceinture. Comme on le voit mieux sur la figure 4, le système de serrage sert à raccorder deux tubes 1 et 2 dont les extrémités sont pourvues de surfaces d'appui 1A et 2A. Pour raccorder les tubes, leurs extrémités sont rapprochées jusqu'à se trouver axialement dans le renfoncement 15, et le diamètre de la ceinture est réduit de sorte que les flancs 12C et 12D viennent se serrer contre les surfaces d'appui 1A et 2A. En l'espèce, les surfaces d'appui 1A et 2A sont formées sur de collerettes radiales que présentent les extrémités des tubes 1 et 2.

Ci-après, il sera fait référence à la rondelle 20 en tant que joint d'étanchéité, bien que cette fonction d'étanchéité ne soit qu'un exemple de fonction pour la rondelle. Elle peut prioritairement servir à prémonter le collier sur l'un des tubes. Comme indiqué, le joint d'étanchéité 20 est disposé à l'intérieur du collier. Pour le raccordement des tubes 1 et 2, les surfaces avant 1'A et 2'A des extrémités des tubes 1A et 2A viennent se placer de part et d'autre d'une partie annulaire d'étanchéité 21 que présente le joint 20.

Au sens du présent exposé, le sens vers l'avant, pour le tube 1 ou 2, est le sens allant vers l'autre tube 2 ou 1 lorsque leurs extrémités sont rapprochées pour assembler les tubes. Ainsi, les surfaces d'appui 1A et 2A sont formées sur les faces arrière des collerettes radiales que présentent les extrémités des tubes. Le sens vers l'arrière est évidemment le sens opposé. Pour un élément, le sens vers l'intérieur, est celui va vers l'axe A. Le sens vers l'extérieur est opposé.

En l'espèce, la partie annulaire d'étanchéité comprend une rondelle métallique 22 et une rondelle à base non métallique 24 fixée à la rondelle métallique. En l'espèce, ainsi qu'on le comprend en considérant ensemble les figures 1, 2 et 3, la partie annulaire d'étanchéité comprend la rondelle métallique 22, la rondelle à base non métallique 24 disposée sur une première face de la rondelle métallique et une autre rondelle à base non métallique 26 disposée sur l'autre face de la rondelle métallique. Ainsi, la rondelle métallique est prise en sandwich entre les rondelles à base non métallique 22 et 24.

Par exemple, la rondelle métallique 22 peut être fabriquée dans le même métal que la ceinture 12, par exemple en acier inoxydable. La ou les rondelles à base non métallique 24, 26 peuvent être formées dans un matériau composite, par exemple à base de mica.

La ou les rondelles à base non métallique 24 et 26 sont portées par la rondelle métallique 22. Ainsi qu'on le voit sur les figures 1 à 3, cette rondelle métallique 22 porte des pattes de support par lesquelles la rondelle métallique et la rondelle à base non métallique sont supportées par rapport au collier 10. Le joint d'étanchéité est ainsi prémonté dans la ceinture, c'est-à-dire que, avant la mise en place du collier sur les tubes et son serrage, le joint d'étanchéité est porté par le collier de sorte que le collier et le joint peuvent être manipulés comme un ensemble.

Par ailleurs, la rondelle métallique peut également porter des pattes de support servant au prémontage du collier équipé de la rondelle sur l'un des tubes devant être assemblés. Ainsi, l'ensemble formé par le collier et le joint d'étanchéité peut être disposé à l'extrémité de l'un des tubes et rester en place à cette extrémité, avant la mise en place de l'extrémité de l'autre tube et le serrage du collier. Les mêmes pattes peuvent avoir la double fonction de servir au prémontage du joint d'étanchéité dans la ceinture et au prémontage de l'ensemble formé par le collier et le joint à l'extrémité de l'un des tubes. Ces pattes de support sont portées par la périphérie externe (éloignée de l'axe A de la ceinture), de la rondelle métallique 22.

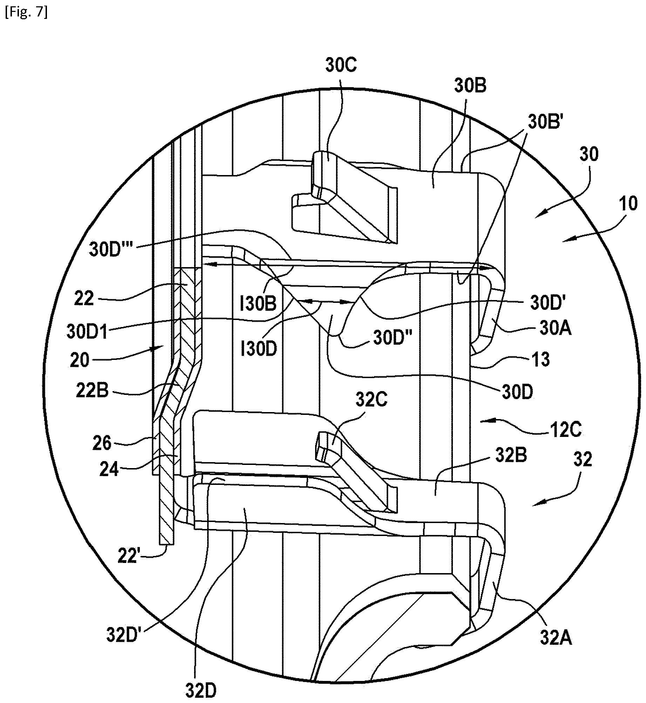

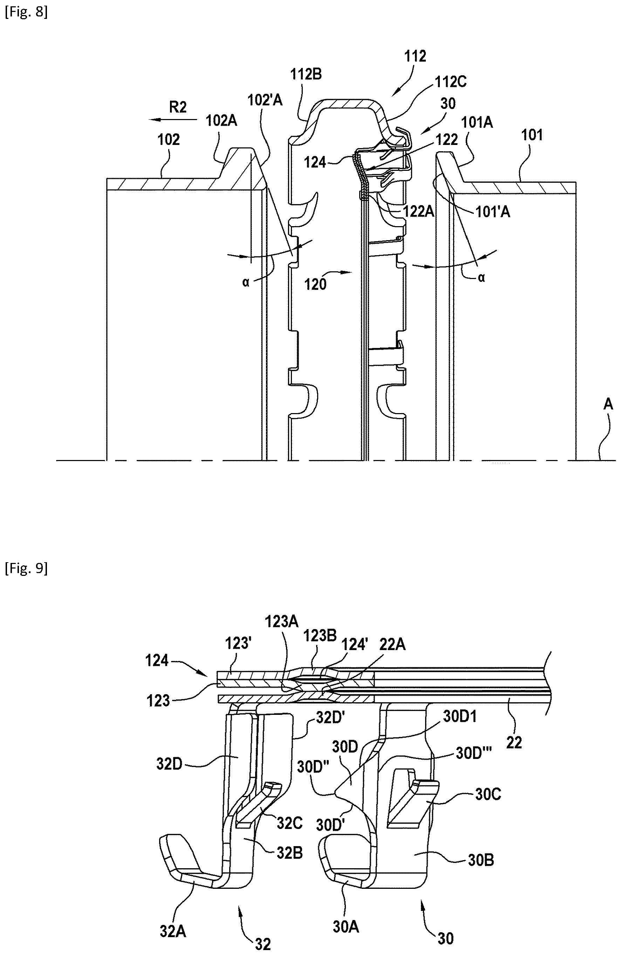

En l'espèce, on a représenté trois types de pattes différentes. Comme on le voit mieux sur les figures 7 et 9, les pattes de support 30 présentent des extrémités 30A recourbées en crochet de manière à pouvoir s'accrocher sur le bord 13 du flanc 12C de la ceinture 12. Entre leur zone de raccordement à la périphérie externe 22' de la rondelle métallique 22 et ce crochet 30A, ces pattes 30 présentent un tronçon de liaison 30B qui s'étend en l'espèce sensiblement axialement, c'est-à-dire sensiblement parallèlement à l'axe A. Comme on le voit mieux sur la figure 7, ce tronçon de liaison30B présente, une languette d'accrochage 30C qui est découpée dans le tronçon de liaison 30B et repliée radialement vers l'intérieur en s'étendant vers son extrémité libre, dans le sens allant du crochet 30A à la périphérie externe de la rondelle métallique 22'. Cette languette 30C sert à agripper la rondelle sur la surface d'appui 1A du tube 1 pour retenir le collier prémonté à l'extrémité de ce tube. On voit que l'orientation de cette languette 30C dans le sens allant en s'éloignant du crochet 30A, évite que le tube ne puisse être dégagé de la rondelle dans le sens vers l'arrière pour ce tube 1, selon la flèche R1 indiquée sur la figure 4. La languette 30C d'une patte 30 est un exemple de saillie interne configurée pour s'agripper sur la surface d'appui 1A insérée dans le collier.

Par ailleurs, les pattes de support 30 présentent des ailes de retenue 30D qui, à partir des bords longitudinaux des tronçons de liaison 30B, sont repliées radialement vers l'extérieur, c'est-à-dire de manière à s'éloigner de l'axe A. Par ailleurs, ces ailes de retenue 30D présentent un bord de retenue 30D' dirigé vers la face interne du crochet 30A et donc vers la face interne du flanc 12C de la ceinture 12 lorsque le joint d'étanchéité est prémonté dans la rondelle. Ces bords de retenue 30D' sont espacés des faces internes des crochets 30A. Le bord 13 du flanc 12C vient se loger dans l'espace ainsi ménagé entre le crochet 30A et le bord de retenue 30D. Ceci permet de maintenir la rondelle métallique 22 par rapport à la ceinture du collier en la retenant dans les deux sens axiaux.

Bien que les figures montrent que le tronçon de liaison 30B présente une aile de retenue 30D sur chacun de ses deux bords 30B' longitudinaux (sensiblement parallèles à l'axe A), il pourrait ne présenter qu'une seule aile de retenue.

On voit sur la figure 7 que l'aile de retenue 30D présente une largeur I30D, mesurée axialement, qui diminue en allant vers son extrémité libre 30D". Ainsi, lors du serrage du collier, l'aile de retenue 30D a tendance à naturellement glisser contre la périphérie interne du flanc 12C et à se replier ou s'écraser sans gêner le serrage.

On voit que la largeur de l'aile de retenue à son extrémité libre est très faible, fournissant un contact quasiment ponctuel contre la périphérie interne du flanc 12C à l'état non serré du collier. La largeur de l'aile de retenue à son extrémité libre est inférieure ou égale à 1/4 de la largeur de l'aile de retenue à sa base 30D‴, cette base étant la partie de l'aile de retenue par laquelle elle est rattachée au tronçon de liaison 30B qui la porte. La largeur de l'aile de retenue à son extrémité libre 30D" est même inférieure ou égale à 1/10 de sa largeur à sa base 30D‴

La largeur de l'aile de retenue 30D à son extrémité libre 30D" est inférieure ou égale à 1/5 de la longueur I30B du tronçon de liaison 30B, cette longueur I30B étant mesurée axialement. La largeur de l'aile de retenue 30D à son extrémité libre 30D" est même inférieure ou égale à 1/15 de la longueur I30B du tronçon de liaison 30B.

La largeur de l'aile de retenue 30D à sa base 30D‴ est inférieure ou égale à 1/3 de la longueur I30B du tronçon de liaison 30B.

Ces caractéristiques dimensionnelles et ces rapports géométriques permettent d'obtenir un excellent compromis entre la nécessité d'assurer que l'aile de retenue ait une bonne résistance aux efforts axiaux et celle de permettre qu'elle se déforme assez facilement sous l'effet de forces radiales vers l'intérieur, pour ne pas consommer trop d'effort de serrage.

Globalement, l'extrémité libre 30D" de l'aile de retenue forme une pointe, fournissant un appui quasiment ponctuel contre la périphérie interne du flanc 12C à l'état non serré du collier.

Globalement, l'aile de retenue présente une forme triangulaire. Elle a en quelque sorte la forme d'une aile de raie, qui se ploie assez aisément sous un effort radial, tout en étant résistante aux efforts axiaux. La quantité de matériau dans lequel est réalisée l'aile de retenue est minimisée, ce qui favorise sa capacité à se déformer sous l'effort de serrage, mais la base de l'aile de retenue est suffisamment large, et l'aile de retenue est suffisamment longue radialement, pour que l'aile de retenue assure sa fonction de retenue axiale et d'entretoisement tant que le collier n'est pas serré.

Considéré en vue radiale comme sur la figure 7, le bord de retenue 30D' de l'aile de retenue 30D présente une forme concave. Ceci permet un mouvement de pivot arc sur arc entre le bord de retenue de l'aile de retenue et le bord du flanc de la ceinture, lors du serrage, lorsque ce bord est rayonné de manière à former une surface convexe. Ce mouvement de pivot favorise le mouvement de rabat de l'aile de retenue lors du serrage.

A l'inverse, le bord 30D1 de l'aile de retenue 30D qui est opposé à son bord de retenue 30D" présente une forme convexe.

La patte de support peut être formée en une seule pièce avec la rondelle, dans un feuillard. Elle est initialement découpée formée à plat, avant de subir des pliages successifs. A plat, l'aile de retenue peut former un triangle dont la base est rattachée au tronçon de liaison et dont le côté destiné à former le bord de retenue est pratiquement perpendiculaire à la direction longitudinale du tronçon de liaison, tandis que l'autre côté, destiné à former le bord opposé au bord de retenue, est incliné à environ 45° par rapport à cette direction longitudinale. A plat, le côté de l'aile de retenue destiné à former le bord de retenue peut être très légèrement concave, en ayant par exemple la forme d'un arc de cercle de grand rayon de courbure, ce qui n'enlève pas à l'aile de retenue sa forme globale de triangle.

Les pattes de support comprennent par ailleurs des pattes 32 qui présentent également des crochets 32A à leurs extrémités libres opposées à leurs zones de rattachement à la périphérie externe 22' de la rondelle 22. Ces pattes 32 comprennent également des tronçons axiaux 32B qui s'étendent sensiblement axialement entre le rattachement de ces pattes à la rondelle 22 et les crochets 32A. Ces pattes 32 présentent également des languettes d'accrochage 32C analogues aux languettes 30C précédemment décrites. Enfin, ces pattes 32 comprennent également des ailes de centrage 32D qui sont cependant orientées à l'inverse des ailes de retenue 30D précitées. En effet, les ailes de centrage 32D sont repliées radialement vers l'intérieur à partir des bords longitudinaux des tronçons axiaux 32B. Ces ailes de centrage 32D présentent des bords longitudinaux 32D' qui contribuent à la retenue prémontée du collier sur l'extrémité du tube 1 en retenant la rondelle par rapport au tube vis-à-vis de débattements radiaux. Les bords longitudinaux 32D' peuvent présenter localement une saillie en pointe pour favoriser leur pliage lors du serrage.

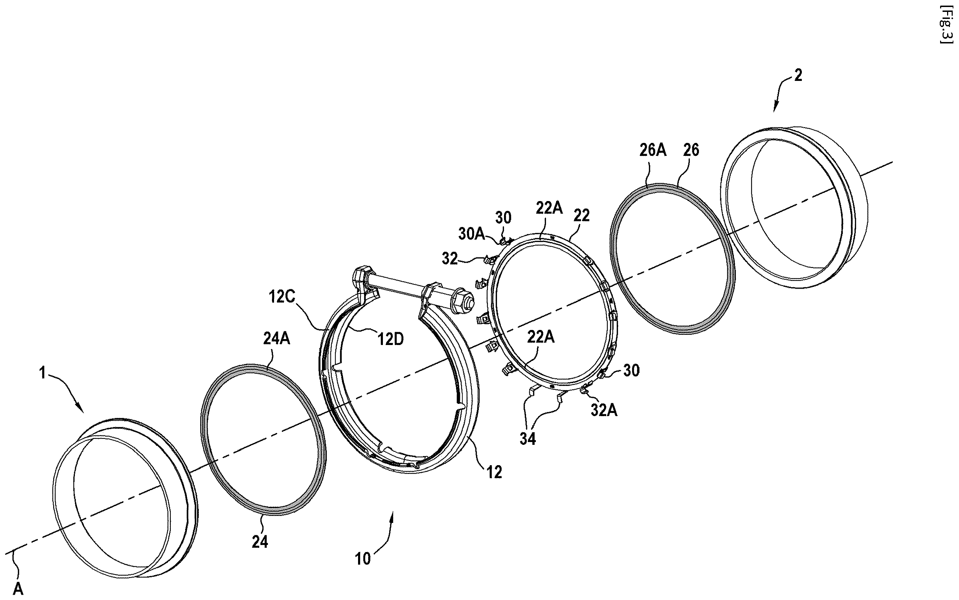

La rondelle métallique présente encore des pattes 34 qui, comme on le voit sur les figures 1 et 3, présentent des crochets 34A à leurs extrémités libres opposées à la périphérie externe 22' de la rondelle 22 et des tronçons axiaux qui s'étendent à partir de cette rondelle jusqu'à ces crochets. Ces pattes servent au calage angulaire de la rondelle par rapport à la ceinture, les crochets 34A étant engagés dans des encoches 13A que présente le bord 13 du flanc 12C de la ceinture.

Globalement, les pattes de support 30 et les pattes de support 32 sont disposées en alternance sur la périphérie externe de la rondelle 22. Ces pattes 30 et 32 servent à l'accrochage sur le bord 13 du flanc 12C de la ceinture 12 en empêchant le joint d'étanchéité de se déplacer par rapport à la ceinture dans le sens opposé au sens R1 indiqué sur la figure 4. Les ailes de retenue 30D servent à retenir la rondelle par rapport à la ceinture en limitant son déplacement dans le sens R1 par rapport à la ceinture. Ces pattes, ainsi que les pattes 32 présentent également les languettes 30C ou 32C servant à retenir l'extrémité du tube à l'intérieur de la rondelle. Les pattes 32 présentent en outre les ailes de centrage 32D servant à centrer le tube par rapport à la rondelle.

Comme on le voit notamment sur la figure 3, les pattes de support 30 et 32 sont formées en une seule pièce avec la rondelle métallique. En fait, cette rondelle métallique est formée en une seule pièce à partir d'un feuillard, par découpe, emboutissage et pliage.

Dans l'exemple représenté sur les figures 1 à 4, la rondelle métallique 22 et les rondelles non métalliques 24 et 26 sont sensiblement planes. En effet, les faces avant 1'A et 2'A des collerettes sur lesquelles sont formées les surfaces d'appui des tubes 1 et 2 sont orientées radialement.

Cependant, comme indiqué par exemple dans les brevets EP 1 451 498, EP 2 598 785 ou encore EP 3 232 107, le collier peut être prémonté sur des tubes dont les surfaces d'appui sont tronconiques. Dans ce cas, comme on le voit sur la figure 8, la rondelle métallique 122 peut présenter une surface tronconique, en particulier une surface tronconique emboutie. Sur la coupe de la figure 8, on voit le joint d'étanchéité 120 avec la rondelle 122 et des pattes 30, 32 et 34, analogues aux pattes précédemment décrites. Cette ceinture 112 est analogue à la ceinture 12, à ceci près que ses flancs 112C et 112B peuvent être inclinés comme les branches d'un V, adaptées à l'évasé des tubes 101 et 102. En effet, la surface d'appui 101A du tube 101 présente une forme tronconique formant un évasé, et la surface d'appui 102A du tube 102 présente une face avant 102'A, qui forme également une surface tronconique de manière à être adaptée à l'évasé précité. La surface d'appui 102A formée à l'arrière dans le sens R2 par rapport à la portion tronconique 102'A, est également tronconique dans le sens opposé, sensiblement parallèle au flanc 112B de la ceinture 112. Comme indiqué, la rondelle métallique présente une surface tronconique emboutie 122A, adaptée aux formes des surfaces 101'A et 102'A des tubes dont le raccordement doit être étanchée à l'aide du joint d'étanchéité 120. La rondelle à base non métallique 124 est quant à elle formée dans un anneau plan qui est déformé pour épouser la forme tronconique de la surface tronconique de la rondelle métallique 122.

L'angle α que forment les surfaces tronconiques précitées des tubes par rapport à la direction perpendiculaire à l'axe A est par exemple de l'ordre de 20 degrés maximum pour une rondelle initialement plane à base non métallique. On peut en revanche avoir un angle α plus élevé, par exemple de l'ordre de 45°, en utilisant une rondelle à base non métallique qui ne soit pas initialement plane, mais soit conformée en conséquence, par exemple par chauffage en particulier lorsqu'il s'agit d'une rondelle comprenant un liant thermoformable.

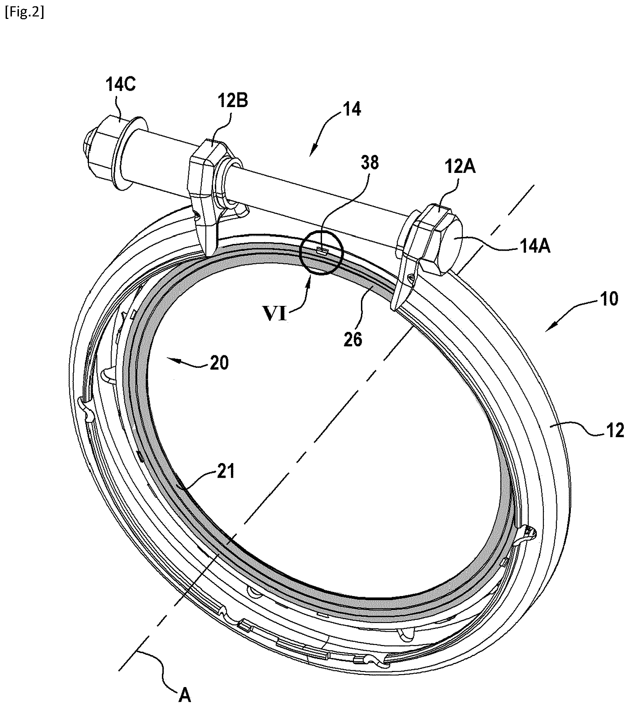

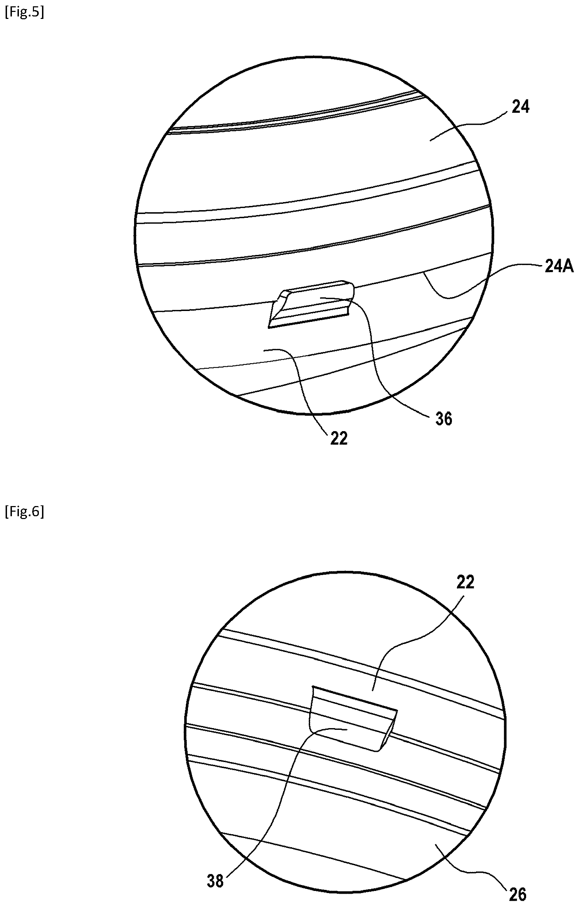

La rondelle à base non métallique 24 peut, contrairement à la rondelle métallique 22, être purement annulaire, en étant dépourvue de pattes de fixation ou autres. La rondelle à base non métallique est portée par la rondelle métallique 22. Elle peut lui être fixée de différentes manières. Par exemple, elle peut être fixée à la rondelle métallique par collage. La rondelle à base non métallique 24 peut être supportée par la rondelle métallique 22 par des moyens purement mécaniques ne faisant pas appel à un matériau extérieur comme de la colle. Ainsi, la rondelle métallique peut porter des pattes de retenue qui coopèrent avec la rondelle à base non métallique pour la retenir par rapport à la rondelle métallique. Ainsi, sur les figures 1 et 5, on voit que la rondelle métallique 22 présente des pattes 36 qui sont formées par des découpes de cette rondelle légèrement redressées axialement pour former des languettes dont les extrémités libres sont orientées vers l'axe A. Ces pattes de retenue 36 servent ainsi à caler et retenir la rondelle à base non métallique 24 en coopérant avec son bord radial externe 24A. De même, comme on le voit sur les figures 2 et 6, la rondelle métallique 22 présente des pattes de retenue 38 qui sont analogues aux pattes de retenue 36 mais sont orientées de l'autre côté axialement pour retenir la rondelle à base non métallique 26 située sur l'autre face de la rondelle 22.

La rondelle métallique 22 peut présenter un renflement annulaire ou, de manière générale, un relief annulaire lui conférant une capacité de déformation axiale. Par exemple, sur la figure 3, on voit que la rondelle 22 présente un bourrelet annulaire 22A en saillie sur l'une de ses faces, contre laquelle est disposée la rondelle à base non métallique 24. La rondelle à base non métallique 24 ou 26 peut être plane ou présenter un renflement annulaire 24A. La rondelle 26 peut quant à elle présenter un renflement annulaire 26A.

Sur la figure 9, on voit un exemple dans lequel la rondelle à base non métallique 124 est en fait formée de deux rondelles élémentaires, respectivement 123 et 123' fixées ensemble, par exemple par collage. Chacune de ces rondelles élémentaires 123 et 123' présente un renflement annulaire, respectivement 123A et 123B. Ainsi, la rondelle 124 présente un renflement annulaire non seulement sur sa première face tournée vers la rondelle métallique 22, mais également sur la deuxième face opposée. Les renflements annulaires 123A et 123B sont disposés sur de mêmes dimensions diamétrales de manière à ménager entre eux un espace annulaire 124'. On voit également sur la figure 9 que la rondelle métallique 22 présente un renflement annulaire 22A en saillie sur sa première face contre laquelle est disposée la rondelle 124, de sorte que les renflements annulaires 22A et 123A soient disposés l'un contre l'autre.

Au lieu d'un renflement annulaire purement convexe, la rondelle métallique 22 peut présenter une vague ou déformation formant un léger pli 22B (voir figure 7).

Dans les exemples qui viennent d'être décrits, la rondelle 20 comprend une partie métallique 22 et une partie non métallique 24 ou 124. Cependant, la rondelle peut être monocomposant et, en particulier, être seulement formée de la partie métallique 22.

L'exposé s'intéresse en particulier aux pattes de support 30 et à leurs ailes de retenue 30D. Ces pattes et ces ailes servent à l'accrochage sur un flanc de la ceinture, en assurant une fonction de retenue axiale de la rondelle en retenant la rondelle par rapport à la ceinture dans les deux sens axiaux, et une fonction d'entretoisement en ménageant entre la partie annulaire de la rondelle et la face interne de ce flanc de la ceinture, un espace annulaire dans lequel l'extrémité d'un tube peut être insérée pour prémonter le système de serrage sur ce tube.

En réalisant ces deux fonctions sur une même patte de support, on en optimise l'efficacité. Il est en effet possible de choisir le nombre et la répartition angulaire des pattes de support en fonction de la résistance axiale souhaitée. On peut avoir plus de pattes de support que dans EP 1 451 498 puisqu'il n'est pas nécessaire de réserver des emplacements à des pattes internes servant uniquement à la retenue de la rondelle vis-à-vis d'un déplacement dans le sens R1 par rapport au collier.

Avec leurs saillies internes (languettes) 30C cette pattes de support 30 assurent également une fonction de retenue axiale du tube dans le collier.

Comme indiqué, la rondelle peut en outre porter des pattes 32 qui servent également à l'accrochage sur la ceinture. Ces pattes 32 servent également au centrage du système de serrage sur le tube, grâce aux ailes de centrage 32D.

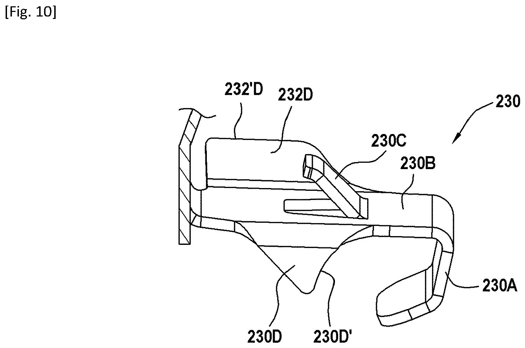

Une même patte peut présenter à la fois une aile de retenue pliée vers l'extérieur du type des ailes de retenue 30D et une aile de centrage pliée vers l'intérieur du type des ailes de centrage 32D. Cette patte réunit alors les fonctions de retenue axiale de la rondelle et d'entretoisement précitées. Si elle est en outre pourvue d'une saillie interne du type des languettes 30C, elle assure en outre la fonction de retenue axiale du tube. Par exemple, une telle patte multifonction 230 est représentée sur la figure 10. Elle présente un crochet 230A, un tronçon de liaison 230B, une languette de 230C et une aile de retenue 230D analogue à ceux des pattes de support 30, et une aile de centrage 232D analogue à celle des pattes 32. On voit en particulier que l'aile de retenue 230D présente un bord de retenue 230'D analogue au bord de retenue 30'D et que l'aile de centrage 232D présente un bord longitudinal de centrage analogue au bord 32D. En l'espèce, l'aile de retenue 230D et l'aile de centrage 232D sont formées sur les deux bords opposés du tronçon de liaison. Cette aile de retenue 230D présente les mêmes caractéristiques géométriques et les mêmes rapports dimensionnels que l'aile de retenue 30D précédemment décrite.

Les pattes 30 et 32, ou les pattes 230, peuvent avoir la même longueur, ce qui simplifie la fabrication. Si elles sont présentes, les pattes 34 de calage angulaire de la rondelle peuvent également avoir la même longueur.

## Revendications

1. Système de serrage pour le raccordement d'un premier et d'un deuxième tube (1, 2) dont les extrémités en regard présentent des surfaces d'appui (1'A, 2'A) faisant saillie par rapport à la surface extérieure cylindrique desdits tubes, le système comprenant un collier (10) pouvant être serré et une rondelle (20), le collier comprenant une ceinture (12) apte à coopérer avec lesdites surfaces d'appui par sa périphérie intérieure délimitant un renfoncement (15) dans lequel les surfaces d'appui peuvent être insérées, la rondelle (20) comprenant une partie annulaire (22) disposée à l'intérieur de la ceinture et portant des pattes de support (30) qui présentent un crochet (30A) configuré pour s'accrocher sur un bord (13) de la ceinture et un tronçon de liaison (30B) qui s'étend entre la partie annulaire (22) et le crochet (30A), **caractérisé en ce que** le tronçon de liaison porte au moins une aile de retenue (30D) qui est repliée radialement vers l'extérieur et qui présente un bord de retenue (30D') espacé du crochet, l'aile de retenue (30D) présentant une largeur (130D), mesurée axialement, qui diminue vers son extrémité libre (30D"), le bord (13) de la ceinture étant logé dans l'espace ménagé entre le bord de retenue et le crochet.

2. Système de serrage selon la revendication 1, dans lequel l'aile de retenue (30D) présente une forme triangulaire.

3. Système de serrage selon la revendication 1 ou 2, dans lequel la largeur de l'aile de retenue (30D) à l'extrémité libre (30D") de cette dernière est inférieure ou égale à 1/4 de la largeur de l'aile de retenue (30D) à sa base (30D‴), optionnellement inférieure ou égale à 1/10 de la largeur de l'aile de retenue (30D) à sa base (30D‴).

4. Système de serrage selon l'une des revendications 1 à 3, dans lequel la largeur de l'aile de retenue (30D) à l'extrémité libre (30D") de cette dernière est inférieure ou égale à 1/5 de la longueur (I30B) du tronçon de liaison (30B), optionnellement inférieure ou égale à 1/15 de la longueur (I30B) du tronçon de liaison (30B).

5. Système de serrage selon l'une des revendications 1 à 4, dans lequel la largeur de l'aile de retenue (30D) à la base (30D‴) de cette dernière est inférieure ou égale à 1/3 de la longueur (I30B) du tronçon de liaison (30B).

6. Système de serrage selon l'une des revendications 1 à 5, dans lequel l'extrémité libre (30D") de l'aile de retenue forme une pointe.

7. Système de serrage selon l'une des revendications 1 à 6, dans lequel, considéré en vue radiale, le bord de retenue (30D') de l'aile de retenue (30D) présente une forme concave.

8. Système de serrage selon l'une des revendications 1 à 7, dans lequel, considéré en vue radiale, le bord (30D1) de l'aile de de retenue (30D) opposé au bord de retenue (30D') présente une forme convexe.

9. Système de serrage selon l'une des revendications 1 à 8, dans lequel le tronçon de liaison (30B) présente une aile de retenue (30D) sur chacun de ses deux bords (30B').

10. Système de serrage selon l'une des revendications 1 à 9, dans lequel les pattes de support présentent une saillie interne (30C), configurée pour s'agripper sur la surface d'appui d'un tube insérée dans le collier, la saillie interne comprenant optionnellement une languette (30C) portée par le tronçon de liaison (30B) et repliée radialement vers l'intérieur par rapport audit tronçon.

11. Système de serrage selon l'une des revendications 1 à 10, dans lequel le tronçon de liaison (30B) s'étend sensiblement axialement.

12. Système de serrage selon l'une des revendications 1 à 11, dans lequel la patte de support (30) est formée en une seule pièce avec la partie annulaire (22).

13. Système de serrage selon l'une des revendications 1 à 12, dans lequel au moins une des pattes de support (230) présente une aile de centrage (232D) repliée radialement vers l'intérieur et présentant un bord longitudinal (232'D).

## Patentansprüche

1. Klemmsystem zum Verbinden eines ersten und eines zweiten Rohres (1, 2), deren gegenüberliegende Enden Auflageflächen (1'A, 2'A) aufweisen, die gegenüber der zylindrischen Außenfläche der Rohre vorstehen, wobei das System eine Schelle (10), die festgezogen werden kann, und eine Scheibe (20) umfasst, wobei die Schelle einen Ring (12) umfasst, der geeignet ist, mit den Auflageflächen über seinen Innenumfang zusammenzuwirken, der eine Vertiefung (15) begrenzt, in die die Auflageflächen eingesetzt werden können, wobei die Scheibe (20) einen ringförmigen Teil (22) umfasst, der innerhalb des Rings angeordnet ist, und Stützlaschen (30) trägt, die einen Haken (30A), welcher dazu ausgebildet ist, sich an einem Rand (13) des Rings einzuhaken, sowie einen Verbindungsabschnitt (30B) aufweisen, welcher sich zwischen dem ringförmigen Teil (22) und dem Haken (30A) erstreckt, **dadurch gekennzeichnet, dass** der Verbindungsabschnitt wenigstens einen Halteflügel (30D) trägt, der radial nach außen gebogen ist und einen von dem Haken beabstandeten Halterand (30D') aufweist, wobei der Halteflügel (30D) eine axial gemessene Breite (I30D) aufweist, die zu seinem freien Ende (30D") hin abnimmt, wobei der Rand (13) des Rings in dem zwischen dem Halterand und dem Haken ausgebildeten Raum aufgenommen ist.

2. Klemmsystem nach Anspruch 1, bei dem der Halteflügel (30D) eine dreieckige Form aufweist.

3. Klemmsystem nach Anspruch 1 oder 2, bei dem die Breite des Halteflügels (30D) an dessen freiem Ende (30D") kleiner als oder gleich 1/4 der Breite des Halteflügels (30D) an seiner Basis (30D‴) ist, optional kleiner als oder gleich 1/10 der Breite des Halteflügels (30D) an seiner Basis (30D‴) ist.

4. Klemmsystem nach einem der Ansprüche 1 bis 3, bei dem die Breite des Halteflügels (30D) an dessen freiem Ende (30D") kleiner als oder gleich 1/5 der Länge (I30B) des Verbindungsabschnitts (30B) ist, optional kleiner als oder gleich 1/15 der Länge (I30B) des Verbindungsabschnitts (30B) ist.

5. Klemmsystem nach einem der Ansprüche 1 bis 4, bei dem die Breite des Halteflügels (30D) an dessen Basis (30D‴) kleiner als oder gleich 1/3 der Länge (I30B) des Verbindungsabschnitts (30B) ist.

6. Klemmsystem nach einem der Ansprüche 1 bis 5, bei dem das freie Ende (30D") des Halteflügels eine Spitze bildet.

7. Klemmsystem nach einem der Ansprüche 1 bis 6, bei dem, in radialer Ansicht betrachtet, der Halterand (30D') des Halteflügels (30D) eine konkave Form aufweist.

8. Klemmsystem nach einem der Ansprüche 1 bis 7, bei dem, in radialer Ansicht betrachtet, der Rand (30D1) des Halteflügels (30D), welcher dem Halterand (30D') gegenüberliegt, eine konvexe Form aufweist.

9. Klemmsystem nach einem der Ansprüche 1 bis 8, bei dem der Verbindungsabschnitt (30B) an jedem seiner beiden Ränder (30B') einen Halteflügel (30D) aufweist.

10. Klemmsystem nach einem der Ansprüche 1 bis 9, bei dem die Stützlaschen einen inneren Vorsprung (30C) aufweisen, der dazu ausgebildet ist, sich an der in die Schelle eingesetzten Auflagefläche eines Rohrs festzuklammern, wobei der innere Vorsprung optional eine Zunge (30C) umfasst, die von dem Verbindungsabschnitt (30B) getragen und gegenüber dem Abschnitt radial nach innen gebogen ist.

11. Klemmsystem nach einem der Ansprüche 1 bis 10, bei dem der Verbindungsabschnitt (30B) sich im Wesentlichen axial erstreckt.

12. Klemmsystem nach einem der Ansprüche 1 bis 11, bei dem die Stützlasche (30) mit dem ringförmigen Teil (22) einstückig ausgebildet ist.

13. Klemmsystem nach einem der Ansprüche 1 bis 12, bei dem wenigstens eine der Stützlaschen (230) einen Zentrierflügel (232D) aufweist, der radial nach innen gebogen ist und einen Längsrand (232'D) aufweist.

## Claims

1. A clamping system for connecting a first and a second pipe (1, 2) whose facing ends have bearing surfaces (1'A, 2'A) protruding relative to the cylindrical external surface of said pipes, the system comprising a collar (10) that can be clamped and a washer (20), the collar comprising a belt (12) able to cooperate with said bearing surfaces by its internal periphery delimiting a recess (15) into which the bearing surfaces can be inserted, the washer (20) comprising an annular part (22) disposed inside the belt and carrying support lugs (30) which have a hook (30A) configured to hook on an edge (13) of the belt and a link section (30B) which extends between the annular part (22) and the hook (30A), **characterized in that** the link section carries at least one retaining wing (30D) which is bent radially outwardly and which has a retaining edge (30D') spaced from the hook, the retaining wing (30D) having a width (I30D), measured axially, which decreases towards its free end (30D"), the edge (13) of the belt being housed in the space formed between the retaining edge and the hook.

2. The clamping system according to claim 1, wherein the retaining wing (30D) has a triangular shape.

3. The clamping system according to claim 1 or 2, wherein the width of the retaining wing (30D) at the free end (30D") thereof is less than or equal to 1/4 of the width of the retaining wing (30D) at its base (30D‴), optionally less than or equal to 1/10 of the width of the retaining wing (30D) at its base (30D‴).

4. The clamping system according to any of claims 1 to 3, wherein the width of the retaining wing (30D) at the free end (30D") thereof is less than or equal to 1/5 of the length (I30B) of the link section (30B), optionally less than or equal to 1/15 of the length (I30B) of the link section (30B).

5. The clamping system according to any of claims 1 to 4, wherein the width of the retaining wing (30D) at the base (30D‴) thereof is less than or equal to 1/3 of the length (I30B) of the link section (30B).

6. The clamping system according to any of claims 1 to 5, wherein the free end (30D") of the retaining wing forms a tip.

7. The clamping system according to any of claims 1 to 6, wherein, when viewed radially, the retaining edge (30D') of the retaining wing (30D) has a concave shape.

8. The clamping system according to any of claims 1 to 7, wherein, when viewed radially, the edge (30D1) of the retaining wing (30D) opposite to the retaining edge (30D') has a convex shape.

9. The clamping system according to any of claims 1 to 8, wherein the link section (30B) has a retaining wing (30D) on each of its two edges (30B)'.

10. The clamping system according to any of claims 1 to 9, wherein the support lugs have an inner protrusion (30C), configured to grip the bearing surface of a pipe inserted into the collar, the inner protrusion optionally comprising a tab (30C) carried by the link section (30B) and bent radially inwardly relative to said section.

11. The clamping system according to any of claims 1 to 10, wherein the link section (30B) extends substantially axially.

12. The clamping system according to any of claims 1 to 11, wherein the support lug (30) is formed in one piece with the annular part (22).

13. A link system according to any of claims 1 to 12, wherein at least one of the support lugs (230) has a centering wing (232D) bent radially inwardly and having a longitudinal edge (232'D).
